Europäisches Patentamt

**European Patent Office**

**Office européen des brevets**

(11) Numéro de publication: **0 153 220**
A2

# DEMANDE DE BREVET EUROPEEN

(21) Numéro de dépôt: 85400199.7

(22) Date de dépôt: 06.02.85

(51) Int. Cl.⁴: **B 32 B 31/08**, B 32 B 31/12

(30) Priorité: 10.02.84 FR 8402059

(43) Date de publication de la demande: 28.08.85
Bulletin 85/35

(84) Etats contractants désignés: BE DE FR GB NL

(71) Demandeur: RECTICEL, Société dite:, 6, Boulevard du Général Leclerc, F-92115 Clichy (FR)

(72) Inventeur: Sauniere, Jean, Les Tourets Albias, F-82800 Negrepelisse (FR)

(74) Mandataire: Loyer, Yves et al, CABINET PIERRE LOYER 18, rue de Mogador, F-75009 Paris (FR)

(54) Machine perfectionnée pour le thermocollage de tissus ou films sur support souple ou rigide.

(57) Machine pour thermocollage de tissus ou films sur support souple ou rigide comportant des moyens pour l'alimentation du support (5), d'un film thermofusible (3) et d'un tissu ou autre matière (7). Cette machine comporte un premier cylindre (8), dit cylindre chauffant, sur la périphérie duquel sont alimentés le film (3) et un second cylindre (13), dit cylindre de pressage, en contact à pression substantielle avec le premier selon une génératrice (15) en aval du point d'alimentation du film (3), le support (5) étant alimenté en aval de ce point et en amont de la génératrice (15), le support (5) passant ensuite sur un troisième cylindre (16), dit cylindre d'affichage, alimenté en tissu (7) et appliquant celui-ci sur le support encollé (5) avec une pression relativement faible en coopération avec un contre-cylindre qui peut être le cylindre (13).

## Machine perfectionnée pour le thermocollage
## de tissus ou films sur support souple ou rigide

Il est connu d'afficher un tissu ou un film sur un support souple tel qu'une lame de mousse plastique ou sur des plaques rigides au moyen d'un film fusible ou thermocollant tel qu'un film de polyéthylène spécial.

De tels films fondent à des températures de l'ordre de 120°-130°C et cette opération est généralement réalisée lorsque le support est souple sur des machines à calandrer à cylindres chauffants; sur l'un des cylindres passe le support revêtu du film thermocollant et sur l'autre cylindre passe le tissu qui sont ainsi réchauffés séparément pour être ensuite pressés les uns contre les autres de façon à réaliser l'affichage.

L'inconvénient d'une telle machine est double: d'une part, elle opère un calandrage, ce qui ne convient pas à certains tissus (par exemple, les velours ou tissus à reliefs), d'autre part, elle chauffe fortement le tissu et le support de mousse, la transmission de chaleur au film thermocollant se faisant à travers eux, ce qui ne convient pas à certains tissus (par exemple,

2  0153220

les tissus synthétiques) ou même à certains supports.

D'autre part, les développements récents de certains revêtements muraux à base de tissus affichés sur supports rendent souhaitable de réaliser un complexe à la fois étanche aux poussières et perméables à la vapeur, afin d'éviter la formation de taches sur le revêtement. Avec les procédés et machines actuels, ceci nécessite l'emploi de très grandes quantités de colle pour un résultat aléatoire.

La présente invention a pour objet une machine perfectionnée permettant de résoudre ces problèmes.

La machine selon l'invention comporte des moyens pour l'alimentation d'un support souple ou rigide, des moyens pour l'alimentation d'un film fusible thermocollant, des moyens pour l'alimentation en tissu (de film à complexer) et elle est caractérisée en ce qu'elle comporte un premier cylindre qui est un cylindre chauffant sur la périphérie duquel est alimenté le film fusible thermocollant, la température de ce cylindre étant nettement supérieure à la température de fusion du film, un second cylindre, en contact avec le premier en aval du point d'alimentation du film fusible, qui est un cylindre de pressage assurant le transfert de la colle du cylindre chauffant sur le support, lequel est alimenté entre le cylindre de chauffage et le cylindre de pressage et transfert, la face ainsi encollée du support passant ensuite sur un troisième cylindre, qui est un cylindre d'affichage du tissu sur le support encollé, ce troisième cylindre étant à courte distance des précédents, alimenté en tissu et coopérant avec un contre-cylindre qui peut être le cylindre de pressage et de transfert.

Avec une telle machine, le film fusible est directement appliqué sur le cylindre chauffant de sorte que la transmission de chaleur est directe et limitée au film fusible lui-même, sans que le support soit chauffé dans la masse, et le tissu est appliqué par un cylindre froid sur le support enduit de colle à l'état fondu, la distance courte signifiant que, compte tenu de la vitesse, la colle est encore à l'état fondu lorsqu'elle entre en contact avec le tissu, de sorte que le tissu n'est pas chauffé, enfin l'application du tissu sur le support encollé se fait sous pression faible, de sorte que le tissu n'est pas calandré.

L'invention vise également les dispositions préférentielles ci-après:

a) la longueur du trajet du film fusible au contact avec le cylindre chauffant est réglable;

b) la longueur du trajet de support encollé entre cylindre de pressage et cylindre d'affichage du tissu est réglable;

c) dans le cas de support souple, un cylindre de renvoi est prévu en aval du cylindre d'affichage du tissu, la position de ce cylindre de renvoi étant réglable de telle sorte que le tissu ainsi complexé se sépare du cylindre d'affichage le long de la génératrice de contact entre ce cylindre et son contre-cylindre, tandis qu'il se sépare du contre-cylindre, soit le long de cette génératrice, soit en aval de celle-ci selon le réglage adopté;

d) le support est un support souple et le contre-cylindre d'affichage est constitué par le cylindre de pressage et de transfert, l'axe du cylindre d'affichage étant rotatif autour de l'axe du cylindre de pressage pour le réglage de la distance entre génératrice de pressage de colle et génératrice d'affichage de tissu;

e) les cylindres d'affichage et le renvoi sont tous deux rotatifs autour de l'axe du cylindre de pressage et reliés entre eux à écartement réglable;

f) pour un support rigide, le cylindre d'affichage est attelé à un contre-cylindre séparé, l'ensemble étant mobile parallèlement au plan tangent à la fois aux cylindres de chauffage et de pressage;

g) le cylindre de pressage est pourvu d'un revêtement doué d'élasticité tel que du caoutchouc.

Ces dispositions et toutes autres seront décrites ci-après en détail avec référence au dessin schématique annexé sur lequel:

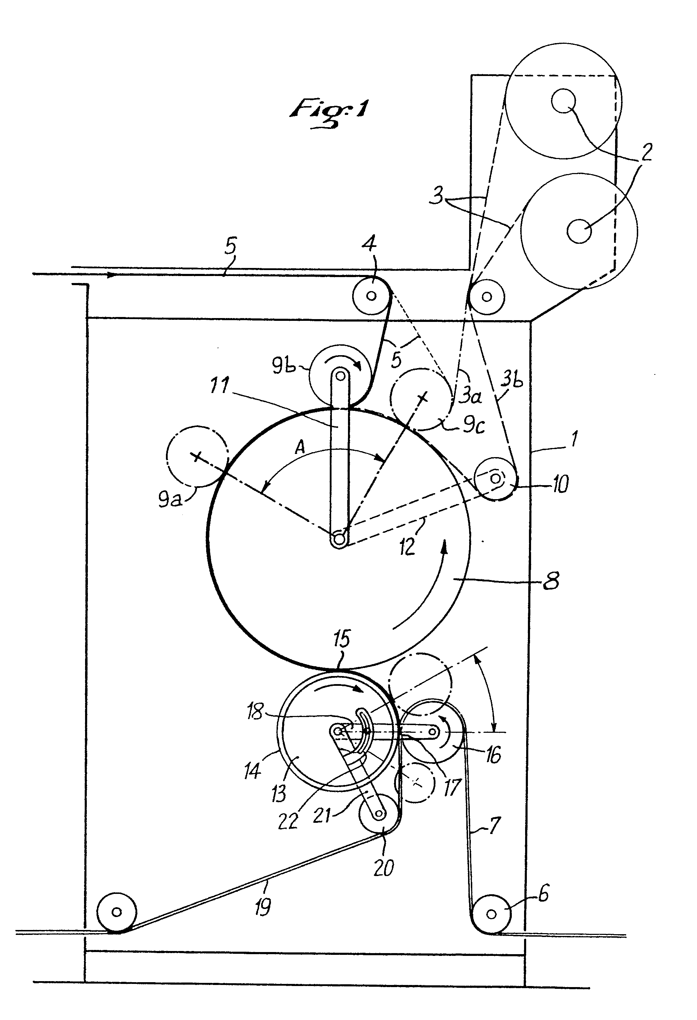

. la figure 1 est une vue schématique en coupe montrant la disposition relative des cylindres de la machine dans une variante de réalisation pour support souple;

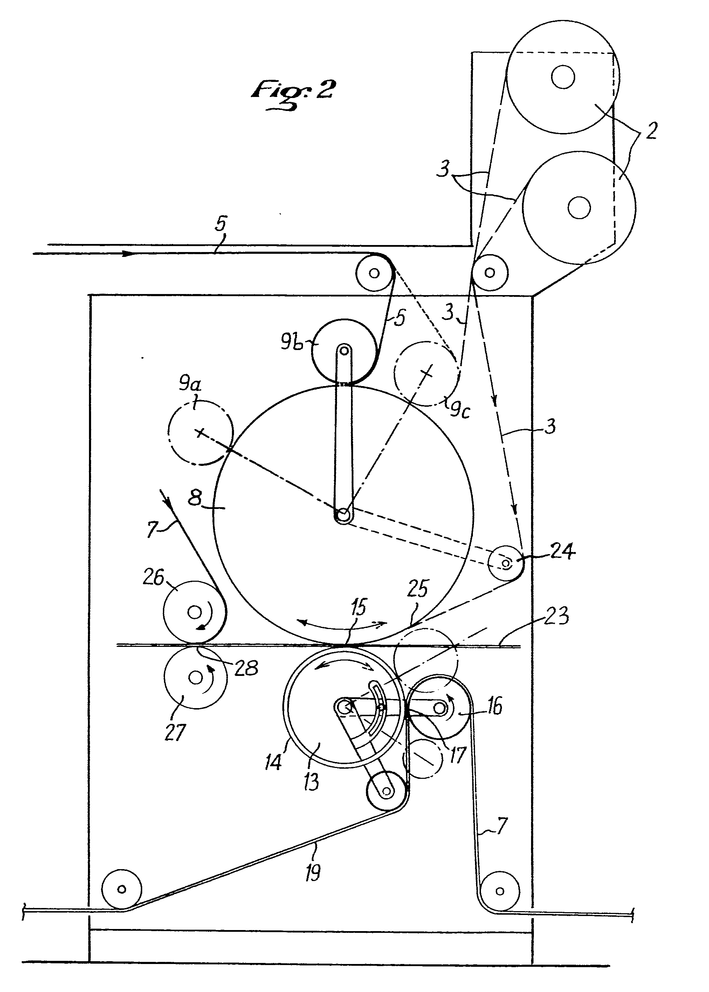

. la figure 2 est une vue schématique analogue pour une machine mixte pouvant complexer aussi bien un support rigide qu'un support souple.

En se reportant à la figure 1, on voit que la machine comporte, sur un bâti ou dans une carrosserie schématisée en 1:

. un système d'alimentation 2 pour un film fusible thermocollant 3;

. un système d'alimentation 4 pour une lame de support souple 5, telle qu'une lame de mousse de polyuréthane ou polyéther;

. un système d'alimentation 6 pour tissu ou autre matière à complexer 7.

Conformément à l'invention, la machine comprend un cylindre chauffant 8, de diamètre relativement grand sur la périphérie duquel est alimenté le film thermofusible 3 ainsi que, par dessus ce dernier, le support souple 5.

Le film 3 est ainsi en contact direct avec le cylindre chauffant 8, dont la température est, par exemple, de l'ordre de 250°C, sur une longueur qui, combinée à la vitesse du cylindre 8 assure un temps de chauffage suffisant pour que le film atteigne sa température de fusion, par exemple 120°C-130°C. Par contre, le support souple 5 n'est chauffé que par l'intermédiaire du film 3 et sa température extérieure reste basse à l'encontre de ce qui se produisait dans les machines antérieures dans lesquelles le film fusible était chauffé à travers le support souple.

Le film 3 peut être appliqué sur le cylindre 8 au même point que le support 5 par le moyen du rouleau de renvoi 9 comme indiqué en 9C (trajet 3a); en variante, on peut appliquer le film 3 par un rouleau de renvoi 10 situé en amont du rouleau de renvoi 9 du support (trajet 3b).

Selon une disposition de l'invention, le rouleau 9 (et/ou éventuellement le rouleau 10) est monté sur un axe rotatif autour de l'axe du cylindre 8, par exemple par les bras 11 (et/ou éventuellement 12). Ceci permet de faire varier la longueur de périphérie du cylindre 8 sur laquelle le support 5 et/ou le film 3 sont en contact avec le cylindre 8 et par suite le temps de chauffage. Dans l'exemple représenté, le cylindre 9 peut occuper des positions telles que 9a, 9b, 9c séparées d'un angle A de l'ordre de 90°.

Dans l'exemple représenté figurent deux rouleaux d'alimentation de film 3: pour le cas de support de grande largeur, il est en effet parfois avantageux d'utiliser plusieurs films 3 contigus se chevauchant par leurs bords.

En aval de la génératrice selon laquelle le fim 3 vient en contact avec le cylindre 8, se trouve le cylindre de pressage et de transfert 13, qui est de préférence revêtu d'une surface élastique 14 et appuie contre le cylindre 8 selon la génératrice 15.

Le support 5 revêtu de colle liquide 3 est ensuite guidé le long du cylindre 13, 14 pour passer en 17 entre celui-ci et le cylindre d'affichage 16 qui est alimenté en tissu 7 (ou autre) à partir de l'alimentation 6.

La pression en 15 doit être assez élevée pour que le film 3 se détache du cylindre 8 et soit transférée sur le support 5 qui s'enroule sur le cylindre 13.

De préférence, la pression entre les cylindres 8 et 13 est réglable par le moyen de butées qui limitent le rapprochement des axes de ces cylindres. Ces butées ne sont pas représentées, car leur utilisation est à la portée de l'homme de l'art. Il résulte de cette combinaison que l'écrasement du support 5 est limité à une diminution d'épaisseur prédéterminée quelle que soit l'intensité de la pression appliquée; cette pression est faible en comparaison des pressions habituelles de calandrage.

Conformément à l'invention, la position de la génératrice 17 de contact entre cylindres 13 et 16 est réglable, ce qui assure le réglage de la distance périphérique entre les génératrices 15 et 17, c'est-à-dire le réglage du temps qui sépare le décollement du film 3 du cylindre 8 et l'affichage du tissu 7.

La distance 15, 17 est courte, c'est-à-dire suffisamment faible, compte tenu de la vitesse de défilement du tissu 7 et du support 5, pour que le film 3 soit encore à l'état fondu en arrivant sur la génératrice 17. La distance 15, 16 variera en fonction de la nature de la colle et de son épaisseur, ainsi que de la vitesse des cylindres.

A cette fin, l'axe du cylindre 16 est monté rotatif autour de l'axe du cylindre 13, par exemple, par le moyen des bras rotatifs 18.

A la sortie de l'ensemble 13, 16, le complexe 19 est guidé soit pour sortir tangentiellement aux cylindres 13, 16, soit pour rester appliqué sur le cylindre 13 sur une certaine longueur. A cette fin, le cylindre de renvoi 20 est lui-même monté déplaçable et de préférence rotatif autour de l'axe du cylindre 13 par les bras 21.

Plus précisément, les bras 18 et 21 seront de préférence reliés mécaniquement par un moyen 22 permettant de régler leur écart angulaire et l'ensemble 18, 21, 22 constituera un équipage mobile susceptible de réglage par rotation autour de l'arbre du cylindre 13.

La variante de la figure 2 représente une machine mixte, c'est-à-dire capable de former un complexe sur support rigide aussi bien que sur support souple. A cette fin, elle comporte les mêmes dispositions que la machine de la figure 1 pour le cas de support souple.

Lorsque le support est rigide ou très épais (support 23), il est alimenté directement entre les cylindres 8 et 13 et le film 3 thermofusible est alimenté par le renvoi 24 pour entrer en contact avec la périphérie du cylindre 8 selon une génératrice 25 suffisamment en amont de la génératrice de contact 15 pour que le film 3 soit fondu en 15 (dans cet exemple, le sens de rotation des cylindres pour le complexage du support rigide 23, est inverse de celui utilisé pour le complexage d'un support souple 5). Le pressage et le transfert du film 3 s'effectuent entre les cylindres 8 et 13 de la même façon que sur la figure 1.

Le support rigide 23 ainsi encollé sort de l'ensemble 8, 13 tangentiellement au contact 13 pour être envoyé au cylindre d'affichage 26, alimenté en tissu 7 (ou autre matière). Dans ce cas, le contre-cylindre 27 du cylindre d'affichage 26 est différent du cylindre de pressage 13 bien que remplissant le même rôle selon la génératrice 28.

La distance 15, 28 sera donc réglable, comme la distance 15, 17,prévoyant la mobilité des cylindres 26, 27.

La pression appliquée en 17 ou en 28 (soit par le cylindre 16 contre le cylindre 13, figures 1 et 2, soit par le cylindre 27 contre le rouleau 26, figure 2) est faible et de préférence également réglée par des butées qui limitent le rapprochement des cylindres à la valeur suffisante pour l'application régulière du tissu 7 sur le support encollé. De ce fait, l'aspect du tissu 7 n'est pas modifié ou altéré, bien que l'affichage soit parfait.

A titre d'exemples d'utilisation de la machine selon l'invention, on donne ci-après quelques exemples non limitatifs:

Exemple 1·

      Support 5: mousse de polyéther de densité 25 kg/m³ - épaisseur 4 mm.

      Tissu 7:   jersey de coton 250 g/m².

      Film 3:    polyéthylène spécial fusible 25 g/m² - épaisseur 25 microns.

      Vitesse de défilement: 20 m/min.

      Température du cylindre: 250°C.

Exemple 2   (Tissu délicat)

      Support 5: mousse comme dans l'exemple 1 - épaisseur 3 mm, largeur de laize: 3 m.

      Film-tissu 7: propylène chaîne et trame 250 g/m².

      Film 3:    comme dans l'exemple 1 - épaisseur 40 microns (film d'étanchéité qui doit rester imperméable à la poussière et perméable à la vapeur d'eau).

      Vitesse de défilement: 10 m/min.

      Température du cylindre 8: 250°C.

Exemple 3

Support 5: plaques de déchet ré-agglomérées
de mousse de densité 120 kg/m³ -
dimension 2 m x 1,40 m -
épaisseur 40 mm.

Film 7:    film polyuréthane 30 microns.

Film 3:    comme dans l'exemple 1. -
épaisseur 25 microns.

Vitesse de défilement: 10 m/min.

Température du cylindre 8: 250°C.

Il résulte de la description qui précède que la machine selon l'invention permet de réaliser l'affichage de tissu ou autre film sur un support souple comme sur un support rigide sans que le tissu ou autre matière ne risque d'être altéré ni par chauffage ni par calandrage. De plus, elle est d'une grande souplesse de fonctionnement, le réglage de la fusion du film et son enduction sous pression se faisant par réglage de la température du cylindre 8, de sa vitesse, et de la longueur périphérique d'application du film thermofusible, indépendamment du réglage de la pression d'application du tissu et de la distance entre l'enduction du support et l'affichage du tissu, distance et pression qui permettent de régler et d'optimiser séparément, les conditions de l'affichage proprement dit.

Différentes variantes peuvent être adoptées pour la réalisation pratique de la machine sans sortir du cadre de l'invention et selon les particularités propres des matériaux utilisés et des applications envisagées.

## REVENDICATIONS

1. Machine pour le thermocollage de tissus ou films sur support souple ou rigide comportant des moyens pour l'alimentation du support (5) d'un film thermofusible (3) et d'un tissu ou autre matière (7), caractérisée en ce qu'elle comporte un premier cylindre (8) dit cylindre chauffant sur la périphérie duquel est alimenté le film (3), un second cylindre (13), dit cylindre de pressage, en contact à pression substantielle avec le premier selon une génératrice (15) en aval du point d'alimentation du film (3), le support (5) étant alimenté en aval de ce point et en amont de la génératrice (15), le support (5) passant ensuite sur un troisième cylindre (16) dit cylindre d'affichage, alimenté en tissu (7) et appliquant celui-ci sur le support encollé (5) avec une pression relativement faible en coopération avec un contre-cylindre qui peut être le cylindre (13).

2. Machine selon la revendication 1, caractérisée en ce que la longueur du trajet du film (3) en contact avec le cylindre (8) est réglable par un cylindre de renvoi rotatif autour du cylindre (8).

3. Machine selon l'une quelconque des revendications précédentes, caractérisée en ce que la longueur du trajet du support (5) muni du film (3) entre cylindre (8) et cylindre d'affichage est réglable par déplacement du cylindre d'affichage par rapport au cylindre (8).

4. Machine selon l'une quelconque des revendications précédentes, caractérisée en ce que le support (5) est souple et il est prévu un cylindre de renvoi (20) en aval du cylindre (16) dont la position est réglable, de sorte que le tissu complexé se sépare du cylindre (16) le long de la génératrice de contact entre le cylindre (16) et son contre-cylindre, tandis qu'il se sépare du contre-cylindre en aval de ou le long de ladite génératrice.

5. Machine selon la revendication 5, caractérisée en ce que le contre-cylindre est le cylindre de pressage (13), l'axe du cylindre (16) étant rotatif autour du cylindre (13).

6. Machine selon la revendication 5, caractérisée en ce que les cylindres (16) et (20) sont tous deux rotatifs autour du cylindre (13) et reliés entre eux à écartement réglable.

7. Machine selon l'une quelconque des revendications précédentes, caractérisée en ce que le support (5) est rigide et il est prévu un cylindre d'affichage (26) attelé à un contre-cylindre (27), l'ensemble étant mobile parallèlement au plan tangent commun aux cylindres (8 et 13).

8. Machine selon l'une quelconque des revendications précédentes, caractérisée en ce que le cylindre de pressage (13) est pourvu d'un revêtement (14) doué d'élasticité tel que du caoutchouc.

9. Machine selon l'une quelconque des revendications précédentes, dans laquelle des butées sont prévues pour limiter et régler le rapprochement des axes des différents cylindres.

*Fig.1*

*Fig. 2*